# EUROPEAN PATENT SPECIFICATION

(11) **EP 0 971 461 B1**
(45) Date of publication and mention of the grant of the patent: **18.02.2009**
(21) Application number: 99201905.9
(22) Date of filing: 15.06.1999
(51) Int. Cl.: H01R 25/16, H01R 43/16, H01R 9/22

(54) **Electrical busbar with female terminals**
Stromschiene mit Kontaktbuchsen
Barre omnibus avec terminaux femelles

(30) Priority: 09.07.1998 DE 19830800
(43) Date of publication of application: 12.01.2000
(73) Proprietor: Delphi Technologies, Inc., Troy, MI 48007 (US)
(72) Inventor: Hold, Klaus, 42289 Wuppertal (DE); Schaller, Thomas, 42327 Wuppertal (DE)
(74) Representative: Denton, Michael John

(56) References cited:
- DE-A- 19 629 445
- DE-U- 29 707 750
- US-A- 4 959 019
- US-A- 5 060 372

## Description

### Technical Field

The present invention relates to an electrical busbar with female terminals.

### Background of the Invention

In the electrical systems of motor vehicles, it is known to provide an electrical busbar for connection to the vehicle's electrical power supply (typically a battery). Electrical fuses are connected between the busbar and electrical loads in the vehicle. Each electrical fuse has a pair of male terminal blades. One of the male blades is electrically and mechanically connected to the planar portion of the busbar by way of a female terminal which is welded, soldered or clinched to the planar portion. This requires a separate female terminal to be produced for each fuse, and requires a connecting process to be performed to connect each female terminal to the planar portion.

DE 19629445 A discloses a busbar comprising a substantially planar portion and a number of female terminal, each female terminal having a slot which is open at one end and capable of receiving a male terminal blade. US-A-4959019 discloses a busbar comprising a substantially planar portion and a number of male terminal blades integrally formed with the planar portion.

### Summary of the Invention

It is an object of the present invention to provide an improvement to the above described arrangement.

An electrical busbar in accordance with the present invention, formed in one piece by stamping and folding a sheet of metallic material, comprises a substantially planar portion and a number of female terminals integrally formed with the planar portion, wherein each female terminal includes a first part and a second part, the first and second parts lying in planes which are substantially parallel and spaced apart, each part having a slot which is open at one end and capable of receiving a male terminal blade, the slots of each female terminal being aligned with the open ends being positioned adjacent one another.

The present invention removes the need for separately forming the female terminals, and the need for securing the female terminals to the planar portion of the busbar.

### Brief Description of the Drawings

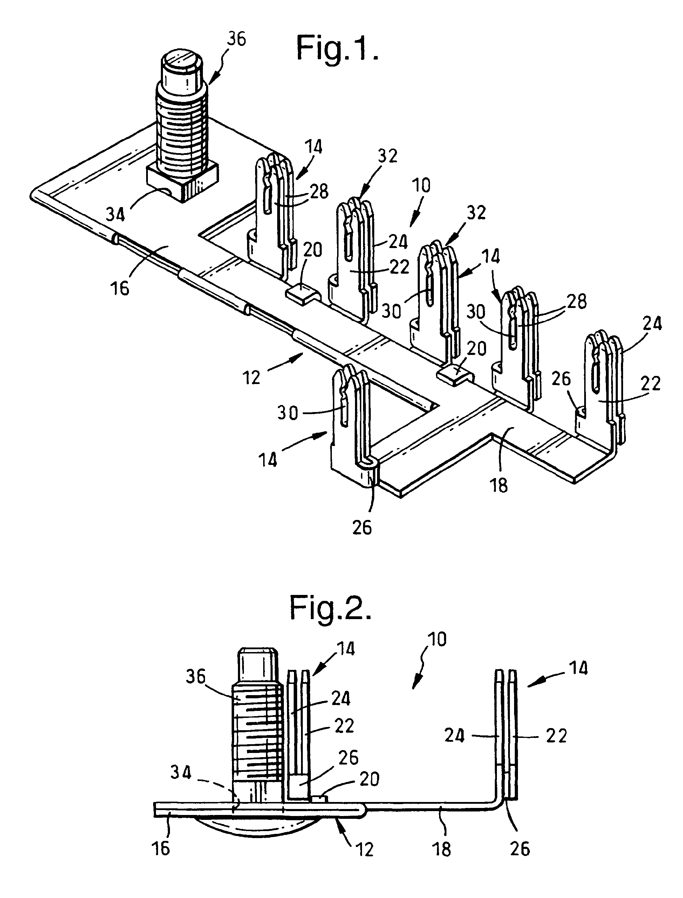

The present invention will now be described, by way of example, with reference to the accompanying drawings, in which:-
Figure 1 is a perspective view of an electrical busbar in accordance with the present invention;
Figure 2 is an end view of the electrical busbar of Figure 1; and

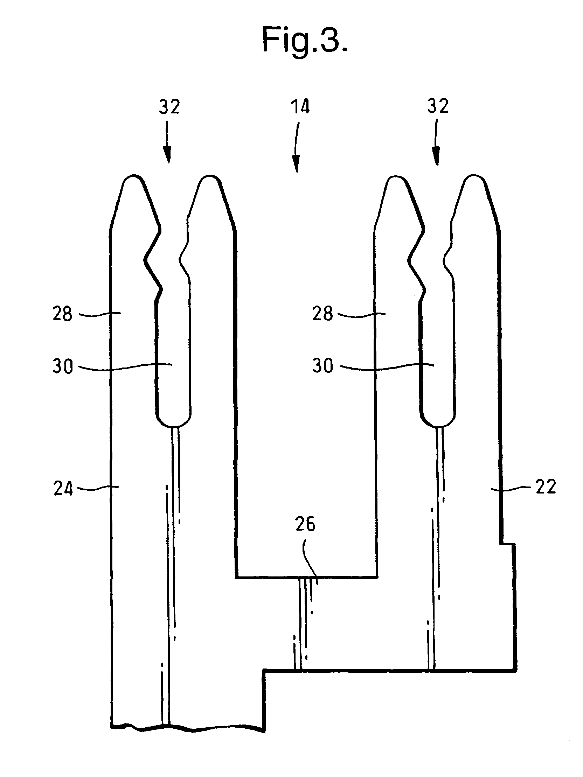

Figure 3 is an enlarge side view of a female terminal, prior to folding, of the electrical busbar of Figure 1.

### Description of the Preferred Embodiment

Referring to the drawings, the electrical busbar 10 in accordance with the present invention is formed by stamping in one piece from a sheet of metallic material and then folding to form the busbar with a substantially planar portion 12 and a number of female terminals 14 integrally connected with the planar portion. The stamping and folding operations can be any suitable method and will not be described in detail.

The planar portion 12 preferably has a first part 16 which is double the thickness of the metallic sheet and a second part 18 which is the same thickness as the metallic sheet. The first part 16 is formed by folding the metallic sheet back on itself, and then bending over integral tabs 20 to secure the folded parts together.

Each female terminal 14 comprises a first part 22 and a second part 24 which are connected by a substantially U-shaped part 26 which is formed during the folding process, and positioned adjacent the planar portion 12. The first and second parts 22,24 lie in planes which are substantially parallel to one another, spaced apart, and preferably substantially perpendicular to the planar portion 12. Each of the first and second parts 22,24 has a substantially U-shaped portion 28 which defines a slot 30 which is open at one end 32. The slots 30 in each first and second part 22,24 are substantially aligned with the open ends 32 being adjacent one another. The open end 32 of each slot 30 is positioned at the opposite end of each female terminal 14 to the U-shaped part 26. The aligned slots 30 in each female terminal 14 are shaped and sized to receive a male terminal blade (not shown) through the aligned open ends 32 such that the male terminal blade is frictionally gripped by the U-shaped portion 28 of the first and second parts 22,24. The male terminal blade is preferably one of the male terminals of an electrical fuse.

The first part 16 of the planar portion 12 preferably has an aperture 34 for receiving a screw 36 for making an electrical connection with the power supply (not shown) of a motor vehicle.

By forming the electrical busbar 10 with integral female terminals 14, the need for separate female terminals to be produced, and the need for securing the separate female terminals, is avoided. By forming each female terminal 14 from a pair of planar parts 22,24 with aligned slots 30, each female terminal is capable of handling a wide range of electrical currents. By forming the planar portion 12 with a part 16 of double thickness, that part is capable of handling a wider range of electrical current than the part 18 of single thickness. The present invention therefore provides an electrical busbar which is easier to produce and has increased flexibility in terms of options when in use.

## Claims

1. An electrical busbar (10) formed in one piece by stamping and folding a sheet of metallic material, the busbar comprising a substantially planar portion (12) and a number of female terminals (14) integrally formed with the planar portion, **characterized in that** each female terminal includes a first part (22) and a second part (24), the first and second parts lying in planes which are substantially parallel and spaced apart, each part having a slot (30) which is open at one end (32) and capable of receiving a male terminal blade, the slots of each female terminal being aligned with the open ends being positioned adjacent one another.

2. An electrical busbar as claimed in Claim 1, wherein each of the first and second part (22,24) of each female terminal (14) comprises a substantially U-shaped portion (28) which defines the slot (30) therein.

3. An electrical busbar as claimed in Claim 1 or Claim 2, wherein the first and second parts (22,24) of each female terminal (14) are connected by a substantially U-shaped part (26) at the opposed end to the open end (32) of each slot (30).

4. An electrical busbar as claimed in Claim 3, wherein the U-shaped part (26) is positioned adjacent the planar portion (12).

5. An electrical busbar as claimed in any one of Claims 1 to 4, wherein the planar portion (12) comprises a first part (16) and a second part (18), the first part of the planar portion having twice the thickness of the second part of the planar portion.

6. An electrical busbar as claimed in any one of Claims 1 to 5, wherein the planar portion (12) is substantially perpendicular to the first and second parts (22,24) of the female terminals (14).

## Patentansprüche

1. Elektrische Stromschiene (10), in einem Stück durch Stanzen und Falten eines metallischen Werkstoffs geformt, wobei die Stromschiene einen überwiegend flachen Abschnitt (12) und eine Reihe von in diesem flachen Abschnitt integrierten Kontaktbuchsen (14) umfasst, **dadurch gekennzeichnet, dass** jede Kontaktbuchse einen ersten (22) und einen zweiten Teil (24) umfasst, wobei der erste und zweite Teil einander überwiegend parallel und in einem Abstand zueinander angeordnet ist, und jeder Teil einen an einem Ende (32) offenen Schlitz (30) aufweist, der einen Flachstecker aufnehmen kann, und jede Kontaktbuchse so angeordnet ist, dass die offenen Enden einander benachbart sind.

2. Elektrische Stromschiene nach Anspruch 1, wobei jeder erste und zweite Teil (22,24) jeder Kontaktbuchse (14) einen überwiegend U-förmigen Abschnitt (28) aufweist, welcher den Schlitz (30) bildet.

3. Elektrische Stromschiene nach Anspruch 1 oder 2, wobei der erste und zweite Teil (22,24) jeder Kontaktbuchse (14) über einen überwiegend U-förmigen Abschnitt (26) verbunden ist, der sich an dem Ende befindet, das an dem offenen Ende (32) jedes Schlitzes (30) gegenüberliegt.

4. Elektrische Stromschiene nach Anspruch 3, wobei der U-förmige Teil (26) dem flachen Abschnitt (12) benachbart ist.

5. Elektrische Stromschiene nach einem der Ansprüche 1 bis 4, wobei der flache Abschnitt (12) einen ersten (16) und einen zweiten Teil (18) umfasst, und der erste Teil des flachen Abschnitts die doppelte Dicke des zweiten Teils des flachen Abschnitts aufweist.

6. Elektrische Stromschiene nach einem der Ansprüche 1 bis 5, wobei der flache Abschnitt (12) überwiegend lotrecht zum ersten und zweiten Teil (22,24) der Kontaktbuchsen (14) ist.

## Revendications

1. Barre de bus électrique (10) formée d'une seule pièce par estampage et par pliage d'une tôle de matériau métallique, la barre de bus comprenant une portion sensiblement plane (12) et un certain nombre de bornes femelles (14) formées de façon intégrale avec la portion plane, **caractérisée en ce que** chaque borne femelle inclut une première partie (22) et une seconde partie (24), la première et la seconde partie étant situées dans des plans qui sont sensiblement parallèles et espacés, chaque partie présentant une fente (30) qui est ouverte à une extrémité (32) et capable de recevoir une lame de borne mâle, les fentes de chaque borne femelle étant alignées avec les extrémités ouvertes positionnées adjacentes les unes aux autres.

2. Barre de bus électrique selon la revendication 1, dans laquelle chacune de la première et de la seconde partie (22, 24) de chaque borne femelle (14) comprend une portion sensiblement en forme de U (28) qui définit la fente (30) à l'intérieur.

3. Barre de bus électrique selon la revendication 1 ou 2, dans laquelle la première et la seconde partie (22, 24) de chaque borne femelle (14) sont connectées par une partie sensiblement en forme de U (26) à l'extrémité opposée à l'extrémité ouverte (32) de chaque fente (30).

4. Barre de bus électrique selon la revendication 3, dans laquelle la partie en forme de U (26) est positionnée adjacente à la portion plane (12).

5. Barre de bus électrique selon l'une quelconque des revendications 1 à 4, dans laquelle la portion plane (12) comprend une première partie (16) et une seconde partie (18), la première partie de la portion plane ayant deux fois l'épaisseur de la seconde partie de la portion plane.

6. Barre de bus électrique selon l'une quelconque des revendications 1 à 5, dans laquelle la portion plane (12) est sensiblement perpendiculaire à la première et à la seconde partie (22, 24) des bornes femelles (14).
